# EUROPEAN PATENT SPECIFICATION

(11) **EP 0 884 349 B1**
(45) Date of publication and mention of the grant of the patent: **18.02.2004**
(21) Application number: 98110708.9
(22) Date of filing: 10.06.1998
(51) Int. Cl.: C08J 9/00

(54) **Highly filled polymeric foam**
Mousse polymérique fortement chargée
Hochgefüllter Polymerschaum

(30) Priority: 10.06.1997 IT TO970508
(43) Date of publication of application: 16.12.1998
(73) Proprietor: VALSIR S.p.A., 25078 Vestone (BS) (IT)
(72) Inventor: Abevilli, Fulvio, 43039 Salsomaggiore Terme (IT)
(74) Representative: Jorio, Paolo

(56) References cited:
- GB-A- 1 338 647
- US-A- 4 446 254

## Description

The present invention relates to a manufactured article made of low-density synthetic plastic material of good mechanical characteristics and excellent flame resistance and thermal and acoustic insulation properties.

Numerous applications, particularly plumbing installations, require elements, such as pipes, sections, panels, etc., which, though cheap to produce and lightweight, also have good mechanical characteristics (in particular, good mechanical strength and extensibility), and excellent thermal and acoustic insulation and flame resistance properties (in particular, are self-extinguishing with little or no fume emission).

As yet, no one material combines all these characteristics : heat-setting materials are normally difficult and expensive to produce, may emit toxic fumes, and are often fairly fragile; on the other hand, thermoplastic materials (which are cheaper and easier to work) are normally of poor mechanical strength, which is eventually further impaired by "aging", and are also unsatisfactory in terms of flame resistance.

European Patent Application n. 761750 filed by the present Applicant, for example, relates to articles made of expanded three-dimensionally cross-linked plastic material comprising a thermoplastic resin, an inert filler, and conventional additives including chemical or physical expanding agents and cross-linking agents. Though the materials in the above application are easy to mold or extrude and are of good mechanical strength and excellent insulating properties, the manufactured articles are fairly poor as regards certain mechanical characteristics, in particular extensibility (i.e. the ability of the material to stretch and deform without breaking), and are also unsatisfactory in terms of flame resistance.

European Patent EP 254375 relates to manufactured articles for conveying fluids (typically, drain pipes) and which are formed by extruding or injecting a thermoplastic material of a weight per unit area of over 8 kg/m², of 1.8 to 2.7 g/cm³ density, and containing an inert filler of barium sulfate. Such articles have good acoustic insulation properties, but are unsatisfactory in terms of mechanical strength and flame resistance.

It is an object of the present invention to provide a manufactured article made of synthetic thermoplastic material, which is therefore cheap and easy to mold or extrude into pipes, panels, sections, and which at the same time has good mechanical characteristics, is low-density, and has good thermal and acoustic insulation and flame resistance properties.

According to the present invention, there is provided a manufactured article made of synthetic plastic material comprising a thermoplastic polymer resin, in turn comprising at least one thermoplastic polymer or copolymer selected from the group consisting of polyolefins, polychlorovinyls, polystyrenes and mixtures thereof; and an inert filler dispersed uniformly in said resin; said material being an expanded, open- or closed-cell, three-dimensionally cross-linked material; characterized in that the density of said material ranges between 1.450 and 1.750 g/cm³, and is preferably about 1.600 gr/cm³.

The resulting manufactured articles are therefore lightweight, cheap to produce, and have good mechanical characteristics - in particular, excellent extensibility - and excellent flame resistance and thermal and acoustic insulation properties, all of which characteristics remain unchanged in time.

Simultaneously cross-linking and expanding the resin provides (as shown in European Patent Application n. 761750 filed by the present Applicant, and the content of which is included herein as required purely by way of reference) for achieving a good compromise between mechanical strength, light weight and insulation capacity. The Applicant's technicians, however, have surprisingly discovered that expanded cross-linked thermoplastic materials of a density within a given range (1.450-1.750 g/cm³), never before used for similar applications, perform better, both in terms of flame resistance and mechanical strength, than similar materials of a density above or below said range.

That is, lightweight, low-cost articles combining excellent mechanical characteristics, long life, and excellent acoustic insulation and flame resistance properties have surprisingly been discovered to be injection moldable or extrudable using cross-linked thermoplastic materials expanded to a final density of 1.450 to 1.750 g/cm³. One particular density value within this range - roughly 1.600 g/cm³ - shows a considerable and totally unexpected increase in extensibility, which combines with the mechanical, thermal and acoustic insulation, and flame resistance characteristics to improve the overall performance of the article according to specific requirements. Density therefore affects not only the soundproofing performance, as is known, but also, and to a totally unexpected degree, the mechanical properties, and particularly extensibility, of the article. The desired density is achieved by chemically or physically expanding the mix (by adding an expanding agent), so as to achieve not only a controlled reduction in the density of the article, but also a considerable reduction in the amount of material used, and hence in cost, and improved thermal and acoustic insulation performance of the article.

The compositions according to the invention generally comprise a thermoplastic synthetic resin (e.g. with a polyethylene, polypropylene or polychlorovinyl base); an inert filler (natural, such as calcium carbonate, barium sulfate, magnesium or aluminium hydroxide; or synthetic, such as ABS or powdered cross-linked rubber); and other additives (e.g. plasticizers, flame retarders).

According to the invention, any thermoplastic resin may be used, e.g. a polychlorovinyl, polystyrene, polyolefin polymer or copolymer (such as polyethylene, polypropylene, ethylvinylacetate and their copolymers); ABS; or mixtures thereof. Using a thermoplastic material provides for manufacturing articles cheaply and easily, e.g. by injection molding or extrusion. The present invention therefore provides for manufacturing articles of any shape requiring good mechanical characteristics, light weight, and good acoustic insulation and flame resistance properties, and is especially suitable for producing pipes (internal and external drain pipes for rainwater and sewage, pipes for plumbing, aeration, fluids in general and liquid and solid foodstuffs); soundproof, flame-resistant sections (partitions, sections for insulating or intermediate layers, false ceilings and lighting fixtures); insulating, flame-resistant rigid or flexible seals; insulating, soundproof, flame-resistant coverings (thick single- or multilayer roofing and weatherproofing).

Besides determining the density range giving the best characteristics, determining the best components also called for extensive research by the Applicant's technicians to assess the chemical, physical and mechanical characteristics of various components.

As a result, researchers eventually succeeded in determining the inert fillers conferring to the articles according to the invention the best mechanical, flame resistance and insulating characteristics, and which include calcium carbonate, barium sulfate, magnesium hydroxide, aluminium hydroxide, ABS and powdered cross-linked rubber.

Of these, one particular type of barium sulfate - referred to hereinafter as "type 1" and having the chemical-physical characteristics in Table 3 (shown in the example embodiments) - was surprisingly found capable of conferring to the articles an even better combination of properties, in terms of both physical-mechanical characteristics and flame resistance, and is therefore indicated as a preferred component of the mixes according to the invention.

One of the main characteristics of the articles according to the present invention, in fact, is their high degree of flame resistance. As is known, when exposed to flame, traditional thermoplastic materials normally tend to soften and/or melt and begin dripping; while heat-setting materials, by virtue of their three-dimensionally cross-linked structure, tend to cross-link further and form a surface swelling preventing ignition. In this respect, by virtue of its particular composition and structure, the material according to the invention behaves in the same way as a heat-setting material, and, when exposed to flame, melts to a limited extent to form a surface swelling which withdraws the underlying material from the heat source to prevent the material from actually igniting.

On the basis of flame resistance tests to national and international standards, the material according to the invention may be classified "flame resistant" as regards ignition, and "noncombustible" (class 0 of Italian standards) as regards flame propagation.

Moreover, unlike traditional thermoplastic materials, the material according to the invention emits a minimum amount of fumes, by virtue of its novel composition and, in particular, its tendency, as stated, to form surface swellings; and combustion heat - which may be taken as indicating the amount of heat generated by the material - is substantially similar to that of traditional materials.

In addition to selecting and determining the quantity of base polymer and inert filler, appropriate additives also provide for achieving further characteristics, such as stability of the expanded material in the plastic state, and a high degree of elasticity of the plastic material. A high degree of stability of the expanded material prevents "collapse" of the article due to the formation of large cavities, and results in the formation of an expanded material with a fine uniform cell structure; while a high degree of elasticity of the plastic material improves expansion and so reduces density.

A number of non-limiting embodiments of the present invention will now be described purely by way of example.

### EXAMPLE 1 : preparing the mix

Various mixes were prepared comprising a thermoplastic resin, a natural inert filler and substantially known additives (cross-linking, expanding, stabilizing agents), the compositions of which are shown in Tables 1 and 2.

**TABLE 1**

| **RAW MATERIALS** | **RPA/PP** | **RPA/PE** |
|---|---|---|
| polypropylene-based synthetic resin ⁽¹⁾ | 40.000 | - |
| polyethylene-based synthetic resin ⁽²⁾ | - | 40.000 |
| inert filler ⁽³⁾ | 50.000 | 50.000 |
| Hostalub H4 (Hoechst) | 0.500 | 0.500 |
| Irganox B225 (Ciba Geigy) | 0.150 | 0.150 |
| Irganox PS802 (Ciba Geigy) | 0.350 | 0.350 |
| Reoflam PB-370 (F.M.C.) | 9.000 | 9.000 |
| **TOTAL** | 100.000 | 100.000 |

| | | |
|---|---|---|
| ⁽¹⁾ Moplen EPT 30R (Montell) | | |
| ⁽²⁾ Escorene 6301 (Exxon) | | |
| ⁽³⁾ Calcium carbonate, barium sulfate, magnesium or aluminium hydroxide. | | |

**TABLE 2**

| **RAW MATERIALS** | **RPA/PVC-R** | **RPA/PVC-S** |
|---|---|---|
| polychlorovinyl-based synthetic resin ⁽⁴⁾ | 100.000 | - |
| polychlorovinyl-based synthetic resin ⁽⁵⁾ | - | 100.000 |
| inert filler ⁽⁶⁾ | 58.000 | 67.000 |
| Plasticizers-flame retarders ⁽⁷⁾ | - | 40.000 |
| Calcium stearate (Reagens) | 2.000 | 2.500 |
| Zinc stearate (Barlocher) | 1.000 | 1.500 |
| Baerolub P-AC (Barlocher) | 0.500 | 0.250 |
| Baerolub L-PL (Barlocher) | 0.500 | 0.250 |
| **TOTAL** | 162.000 | 211.500 |

| | | |
|---|---|---|
| ⁽⁴⁾ Evipol SH 6521 (E.V.C.) | | |
| ⁽⁵⁾ Evipol SH 7020 (E.V.C.) | | |
| ⁽⁶⁾ Calcium carbonate, barium sulfate, magnesium or aluminium hydroxide. | | |
| ⁽⁷⁾ Reofos 95 (F.M.C.) | | |

Though use was made of a commercial polypropylene resin (the corresponding material is indicated RPA/PP in the Table), a commercial polyethylene resin (RPA/PE) and two commercial polychlorovinyl resins (RPA/PVC-R and RPA/PVC-S), other thermoplastic resins differing from those indicated purely by way of example may obviously also be used.

As stated, various types of inert fillers may be used : natural (e.g. calcium carbonate, barium sulfate, magnesium hydroxide, aluminium hydroxide) or synthetic (e.g. ABS of 1.03 to 1.07 g/cm³ density or powdered cross-linked rubber). Three polypropylene-based mixes were prepared, all with the composition shown in Table 1 (RPA/PP) but each containing a different type of barium sulfate indicated "type 1", "type 2" and "type 3" and having the chemical-physical characteristics shown in Table 3.

Hereinafter, the corresponding materials are indicated RPA/PP-1, RPA/PP-2 and RPA/PP-3, depending on the type of barium sulfate contained (type 1, 2 or 3 respectively).

**TABLE 3**

| **CHARACTERISTICS** | **Method** | **Unit** | **type 1** | **type 2** | **type 3** |
|---|---|---|---|---|---|
| BaSO₄ concentration | - | % | min 99 | min. 99 | min 99 |
| weight loss at 105° C | DIN 53198 | % | blw 0.1 | blw 0.1 | blw0.1 |
| oil absorption | Gardner Coleman | % | 17-18 | 18-19 | 18-19 |
| 325 mesh residue | DIN 53195 | % | blw0.01 | blw 0.01 | blw 0.01 |
| whiteness referred to Mg | - | % | 97-98 | 97-98 | 97-98 |
| apparent specific volume | DIN 53194 | cc/100g | 80-90 | 70-80 | 110-120 |
| water-soluble salts | DIN 53197 | % | 0.1-0.2 | 0.08-0.12 | 0.1-0.2 |
| water-soluble chlorides | - | ppm | blw 50 | blw 50 | blw 50 |
| water-soluble sulfates | - | ppm | blw 500 | blw 500 | blw 500 |
| total FC | - | ppm | max 5 | max 5 | max 5 |
| heavy metals | - | - | none | none | none |
| pH (aqueous susp. 30 g in 200 cc) | - | - | 9-9.5 | 6.5-7.5 | 9-9.5 |
| Hegman grindometer size | - | micron | 0-15 | 0-10 | 0-10 |
| refraction index | - | - | 1.64 | 1.64 | 1.64 |
| real specific weight | DIN 53193 | g/cc | 4.4 | 4.4 | 4.4 |
| dispersion | - | - | good | good | good |
| gloss | - | - | 70-75 | - | 95-100 |

The mixes containing polypropylene- or polyethylene-based resins were prepared in a variable-geometry extruder in which the material was processed thermally and mechanically to melt and convert it into granules. Shear strain, friction and external heating bring the mixture to a high temperature to achieve a fully homogenous mix.

In the case of polychlorovinyl mixes, the components were first mixed in a turbomixer : on reaching a given temperature, the mix was unloaded into a cooler and then fed to a variable-geometry extruder in which the material was processed thermally and mechanically to melt and convert it into granules.

In this case also, shear strain, friction and external heating bring the mixture up to a high temperature to achieve a fully homogenous mix.

### EXAMPLE 2 : transformation methods

The materials obtained as described in Example 1 were then converted into manufactured articles (pipes, sections, seals) by means of a further hot melting process. According to the invention, this step also includes the addition of an expanding agent enabling controlled reduction of the final density of the material, and a cross-linking agent.

In the example described, expansion was effected using varying quantities of chemical expanding agents, such as "Genitron AC4™" produced by Schering Polymer Additives (Great Britain), to obtain articles of different densities ranging between 1.450 and 1.750 gr/cm³. The resin was cross linked using 1.500 parts of organosiloxane compounds, such as Silano or UCARSIL™ produced by Union Carbide (USA), per 100 parts of the mix. Cross linking may obviously also be performed using other chemical agents or even by electron beam radiation.

Transformation of the plastic materials into manufactured articles was conducted in such a way as to maintain the mechanical balance of the mix, limit the length of time the material remains inside the melting screws, prevent overheating the material, and so obtain the best combination of mechanical and technical characteristics. As regards molding conditions, in particular, the extruder body was maintained at a temperature of 180-210°C, the molten mass at 220-230°C, and the mold at 50-60°C, i.e. at a considerably lower temperature than the molten mass, to create a counterpressure - roughly 15 bar - while at the same time preventing the formation of surface defects. A low molding temperature, in fact, has been found to result in the formation of a relatively high-density "skin" and, in some cases, in surface defects, both of which are prevented if the mold is maintained at the above temperature.

For extruded articles, the extruder body was maintained at a temperature of 120-155°C, the extrusion head at 190-200°C, and the molten mass at 180-190°C.

The above mixes were formed into various types of article: in particular, the conduits and fittings for noise testing as described in Example 3.

### EXAMPLE 3 : testing

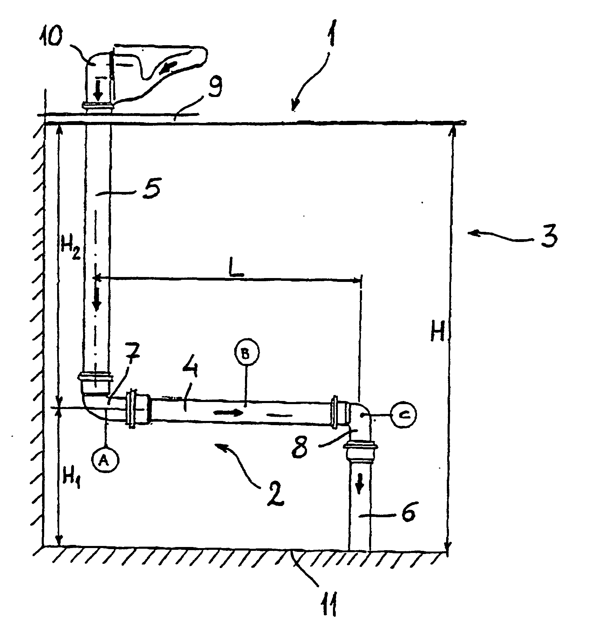

To determine the acoustic insulation capacity of articles, of different densities manufactured according to the present invention, comparative noise tests were performed using the test device shown in the accompanying drawing.

Number 1 in the accompanying drawing indicates a noise testing device comprising a pipe 2 housed inside a 5 m x 3 m, 3.7 m high, rectangular test chamber 3 (the height of chamber 3 is indicated H in the drawing). Pipe 2 comprises a horizontal cylindrical conduit 4 of length L; and two vertical cylindrical conduits 5 and 6 extending from respective axial ends of and connected to horizontal conduit 4 by respective elbow fittings 7 and 8. Conduit 5 extends vertically upwards through the ceiling 9 of chamber 3, and is connected outside the chamber to a discharge conduit 10 of a known lavatory (not shown), while conduit 6 extends vertically downwards through a hole in the floor 11 of chamber 3. Horizontal conduit 4 is located at a predetermined height H₁ of 1 m from floor 11 and at a vertical distance H₂ of 2.7 m from ceiling 9, which distance H₂ and height H₁ respectively equal the lengths of the portions of conduits 5 and 6 inside chamber 3; and known noise detectors (phonometers), not shown for the sake of simplicity, are provided at predetermined sections A, B, C of pipe 2 inside chamber 3.

Device 1 provides for comparative testing the acoustic insulation capacity of similar pipes of different materials. After first measuring the background noise inside chamber 3 by means of a phonometer, a 30-liter flow of water from discharge conduit 10 is fed along pipe 2 at an average flow rate of 2 1/s; and the noise produced by the water at sections A, B, C of each pipe is measured. This was done using Bruel & Kjaer 2235 phonometers, and Real Time Analizer "Rion 29/E" analyzers (class IIEC) with UC12 microphones.

Pipe portions of different densities made of polypropylene-polymer-based materials (RPA/PP composition in Table 1) were noise tested as shown in Table 4.

The test results demonstrate the excellent acoustic insulation properties of the articles manufactured according to the present invention. Though further improvement is of course possible by increasing the density of the material, acoustic insulation is already more than satisfactory, even at the lowest densities - around 1.6 g/cm³- considered.

**TABLE 4**

| **DENSITY (g/cm**^{**3**}**)** | **Background noise dB(A)** | **Section A measurement dB(A)** | **Section B measurement dB(A)** | **Section C measurement dB(A)** |
|---|---|---|---|---|
| 1.450 | 16 | 68 | 64 | 57 |
| 1.500 | 16 | 64 | 62.5 | 52 |
| 1.550 | 16 | 60 | 60 | 50 |
| 1.600 | 16 | 55 | 47.5 | 45 |
| 1.650 | 16 | 55 | 46 | 44 |
| 1.700 | 16 | 53 | 45 | 44 |
| 1.750 | 16 | 52 | 44 | 42 |

The same materials were also tested as normally to international standards to determine the principal physical and mechanical characteristics : specific weight (ISO 1183); Shore D hardness at 30° (ISO 868); tensile strength and extensibility (ISO 527(; tensile modulus (ISO R 178); shock resistance (IEC 614); and VICAT temperature (ISO 306). The test results are shown in Table 5.

**TABLE 5**

| Density [g/cm³] | Shore D hardness | Tensile strength [MPa] | Extensibility [%] | Tensile modulus [MPa] | Shock resistance [°C] | VICAT temp. [°C] |
|---|---|---|---|---|---|---|
| 1.450 | 67 | 19 | 55 | - | -25 | 108 |
| 1.500 | 69 | 20.5 | 35 | - | -25 | 110 |
| 1.550 | 70 | 21.9 | 30 | 259 | -25 | 110 |
| 1.600 | 71 | 21.2 | 135 | 160 | -25 | 110 |
| 1.650 | 75 | 30.2 | 43 | 387 | -25 | 120 |
| 1.700 | 76 | 32.5 | 33 | - | -25 | 122 |
| 1.750 | 78 | 35 | 31 | - | -25 | 125 |

Unlike traditional expanded materials, the mechanical characteristics of which are normally inferior to those of corresponding compact materials, the materials according to the present invention, in addition to the excellent acoustic insulation properties shown above, also have good mechanical characteristics, including unexpected extensibility values: articles of 1.6 g/cm³ manufactured according to the invention show an exceptionally high extensibility value combined with satisfactory mechanical strength values.

By way of comparison, similar noise and mechanical tests were conducted of pipes made from the polypropylene-based materials RPA/PP-1, RPA/PP-2 and RPA/PP-3 described in Example 1 and of the same density (1.60 g/cm³) but containing different types of barium sulfate. The results are shown in Table 6 (noise tests) and Table 7 (mechanical tests).

**TABLE 6**

| **Material (1.60 g/cm**^{**3**} **density)** | **Background noise dB(A)** | **Section A measurement dB(A)** | **Section B measurement dB(A)** | **Section C measurement dB(A)** |
|---|---|---|---|---|
| RPA/PP-1 | 16 | 55 | 47.5 | 45 |
| RPA/PP-2 | 16 | 60 | 62 | 52 |
| RPA/PP-3 | 16 | 61 | 62.5 | 54 |

**TABLE 7**

| **Product** | **Density [g/cm**^{**3**}**]** | **Shore D hardness** | **Tensile strength [MPa]** | **Extensibility [%]** | **Tensile modulus [MPa]** | **Shock resistance [°C]** | **VICAT temp. [°C]** |
|---|---|---|---|---|---|---|---|
| RPA/PP-1 | 1.600 | 71 | 21.2 | 135 | 160 | -25 | 110 |
| RPA/PP-2 | 1.600 | 71 | 20.5 | 133 | 155 | -25 | 108 |
| RPA/PP-3 | 1.600 | 71 | 20.2 | 125 | 153 | -25 | 108 |

The mechanical characteristics and acoustic insulation performance of mixes containing Type 1 barium sulfate are superior to those of equivalent mixes containing the other types : Type 1 barium sulfate therefore provides for achieving the best combination of mechanical strength, flame resistance and thermal and acoustic insulation properties.

As regards the flame performance of the articles manufactured according to the invention, various tests - again as a function of the density of the end products - were conducted to determine the oxygen index (ISO 4589), flame resistance (IEC 614), and flame propagation (to current Italian standards).

The oxygen index and flame resistance test results of polypropylene-based materials of different densities are shown in Table 8.

**TABLE 8**

| **Density [g/cm**^{**3**}**]** | **Oxygen index [%O**_{**2**}**]** | **Flame resistance** |
|---|---|---|
| 1.450 | 31 | passed |
| 1.500 | 33 | passed |
| 1.550 | 42 | passed |
| 1.600 | 42.5 | passed |
| 1.650 | 42.5 | passed |
| 1.700 | 43 | passed |
| 1.750 | 45 | passed |

By way of comparison, oxygen index tests were conducted of a number of different materials (natural and synthetic) and materials according to the invention with different polymer bases (i.e. polypropylene, polyethylene, polychlorovinyl). The test results - again to ISO 4589 and using 3 mm thick synthetic materials - are shown in Table 9. The material according to the invention has a particularly high oxygen index (especially if compared with traditional polymer materials) and may be classified, according to current Italian standards, as "flame resistant" in terms of ignition : when exposed to flame, the material melts to a limited extent to form a surface swelling which withdraws the underlying material from the heat source to prevent the material from actually igniting.

**TABLE 9**

| **MATERIAL** | **OXYGEN INDEX [%O**_{**2**}**]** |
|---|---|
| polyethylene | 18 |
| polystyrene | 18 |
| polymethyl methacrylate | 17.4 |
| nylon 6 | 23 |
| polyvinyl chloride | 45 |
| polyester | 21 |
| cotton fabric | 20.1 |
| pine | 22.4 |
| woolen fabric | 23.8 |
| RPA/PP | 42.5 |
| RPA/PE | 42 |
| RPA/PVC-R | 45 |
| RPA/PVC-S | 33 |

The material according to the invention also showed an excellent resistance to flame propagation, again determined to Italian standards, the test results of which (not shown in detail) classify the material according to the invention as "noncombustible" (Class 0).

The amount of heat developed during combustion of the material (the test method of which is as yet not clearly defined) was determined on the basis of the combustion heat of the material, which, for the material according to the invention, was substantially similar to that of traditional materials.

Unlike traditional thermoplastic materials, the material according to the invention emits a minimum amount of fumes, as shown by optical density analysis in an NBS chamber (test results not shown).

## Claims

1. A manufactured article made of synthetic plastic material comprising a thermoplastic polymer resin, in turn comprising at least one thermoplastic polymer or copolymer selected from the group consisting of polyolefins, polychlorovinyls, polystyrenes and mixtures thereof; and an inert filler dispersed uniformly in said resin; said material being an expanded, open- or closed-cell, three-dimensionally cross-linked material; **characterized in that** the density of said material ranges between 1.450 and 1.750 g/cm³.

2. A manufactured article as claimed in Claim 1, **characterized in that** said inert filler is of natural or synthetic origin, and is selected from the group consisting of: calcium carbonate, barium sulfate, magnesium hydroxide, aluminium hydroxide, ABS, powdered cross-linked elastomeric polymers, and mixtures thereof.

3. A manufactured article as claimed in Claim 1 or 2, **characterized in that** said inert filler is barium sulfate having the chemical-physical characteristics shown in Table 3.

4. A manufactured article as claimed in one of the foregoing Claims, **characterized in that** said resin comprises a polymer selected from the group comprising: polyethylene, polypropylene, polyethylvinyl acetate, polystyrene, PVC, ABS, and relative copolymers.

5. A manufactured article as claimed in one of the foregoing Claims, **characterized in that** the density of said material is about 1.600 gr/cm³.

6. A manufactured article as claimed in one of the foregoing Claims, **characterized in that** said resin has a cross-linking rate of 80% to 100%.

7. A manufactured article as claimed in one of the foregoing Claims, **characterized in that** said material includes stabilizing, lubricating, plasticizing and nonhalogenated self-extinguishing additives.

## Patentansprüche

1. Gefertigter Gegenstand aus einem synthetischen Kunststoffmaterial, umfassend ein thermoplastisches Polymerharz, welches wiederum mindestens ein thermoplastisches Polymer oder Copolymer umfaßt, ausgewählt aus der Gruppe, bestehend aus Polyolefinen, Polychlorvinylenen, Polystyrolen und Gemischen davon, und ein inertes, in dem Harz einheitlich dispergiertes Füllmittel, wobei das Material ein expandiertes, offen- oder geschlossenzelliges dreidimensional vemetztes Material ist, **dadurch gekennzeichnet, daß** die Dichte des Materials im Bereich von zwischen 1,450 und 1,750 g/cm³ liegt.

2. Gefertigter Gegenstand nach Anspruch 1, **dadurch gekennzeichnet, daß** das inerte Füllmittel natürlichen oder synthetischen Ursprungs ist und aus der Gruppe, bestehend aus Calciumcarbonat, Bariumsulfat, Magnesiumhydroxid, Aluminiumhydroxid, ABS, gepulverten, vernetzten, elastomeren Polymeren und Gemischen davon, ausgewählt ist.

3. Gefertigter Gegenstand nach Anspruch 1 oder 2, **dadurch gekennzeichnet, daß** das inerte Füllmittel Bariumsulfat mit den chemischen/physikalischen Eigenschaften, wie in Tab. 3 gezeigt, ist.

4. Gefertigter Gegenstand nach einem der vorhergehenden Ansprüche, **dadurch gekennzeichnet, daß** das Harz ein Polymer umfaßt, ausgewählt aus der Gruppe, umfassend Polyethylen, Polypropylen, Polyethylvinylacetat, Polystyrol, PVC, ABS und verwandten Copolymeren.

5. Gefertigter Gegenstand nach einem der vorhergehenden Ansprüche, **dadurch gekennzeichnet, daß** die Dichte des Materials etwa 1,600 g/cm³ ist.

6. Gefertigter Gegenstand nach einem der vorhergehenden Ansprüche, **dadurch gekennzeichnet, daß** das Harz eine Vernetzungsrate von 80% bis 100% aufweist.

7. Gefertigter Gegenstand nach einem der vorhergehenden Ansprüche, **dadurch gekennzeichnet, daß** das Material stabilisierende, schmierende, plastifizierende und nicht-halogenierte selbstlöschende Additive einschließt.

## Revendications

1. Article manufacturé en matière plastique synthétique comprenant une résine polymère thermoplastique, comprenant à son tour au moins un polymère thermoplastique ou un copolymère choisi dans le groupe consistant en les polyoléfines, les polychlorovinyles, les polystyrènes et les mélanges de ceux-ci; et une charge inerte dispersée uniformément dans ladite résine; ladite matière étant une matière dilatée, à cellules ouvertes ou fermées, réticulée en trois dimensions ; **caractérisé en ce que** la densité de ladite matière se situe entre 1,450 et 1,750 g/cm³.

2. Article manufacturé selon la revendication 1, **caractérisé en ce que** ladite charge est d'origine naturelle ou synthétique, et est choisie dans le groupe consistant en le carbonate de calcium, le sulfate de baryum, l'hydroxyde de magnésium, l'hydroxyde d'aluminium, l'ABS, les polymères élastomères réticulés en poudre et les mélanges de ceux-ci.

3. Article manufacturé selon la revendication 1 ou 2, **caractérisé en ce que** ladite charge inerte est un sulfate de baryum ayant les caractéristiques physico-chimiques indiquées dans le tableau 3.

4. Article manufacturé selon l'une des revendications précédentes, **caractérisé en ce que** ladite résine comprend un polymère choisi dans le groupe comprenant: le polyéthylène, le polypropylène, l'acétate de polyéthylvinyle, le polystyrène, le PVC, l'ABS et les copolymères correspondants.

5. Article manufacturé selon l'une des revendications précédentes, **caractérisé en ce que** la densité de ladite matière est d'environ 1,600 g/cm³.

6. Article manufacturé selon l'une des revendications précédentes, **caractérisé en ce que** ladite résine a un taux de réticulation de 80 % à 100 %.

7. Article manufacturé selon l'une des revendications précédentes, **caractérisé en ce que** ladite matière comprend des additifs stabilisants, lubrifiants, plastifiants et auto extincteurs non halogénés.
